# EUROPÄISCHE PATENTSCHRIFT

(11) **EP 1 965 678 B1**
(45) Veröffentlichungstag und Bekanntmachung des Hinweises auf die Patenterteilung: **08.05.2013**
(21) Anmeldenummer: 06829592.2
(22) Anmeldetag: 14.12.2006
(51) Int. Cl.: A46B 11/00, A46B 15/00

(54) **APPLIKATIONSSTOFFBEHÄLTER FÜR ZAHNBÜRSTEN UND ELEKTRISCHE ZAHNBÜRSTE**
APPLICATION SUBSTANCE RESERVOIR FOR TOOTHBRUSHES AND ELECTRIC TOOTHBRUSH
RECIPIENT A SUBSTANCE D'APPLICATION POUR BROSSE A DENTS ET BROSSE A DENTS ELECTRIQUE

(30) Priorität: 30.12.2005 DE 102005063196
(43) Veröffentlichungstag der Anmeldung: 10.09.2008
(73) Patentinhaber: Braun GmbH, 61476 Kronberg (DE)
(72) Erfinder: HILSCHER, Alexander, 61440 Oberursel (DE); NEYER, Christian, 65760 Eschborn (DE)
(86) Internationale Anmeldenummer: PCT/EP2006/012033
(87) Internationale Veröffentlichungsnummer: WO 2007/079897

(56) Entgegenhaltungen:
- WO-A-00/74591
- WO-A-02/071970
- WO-A-03/054771
- US-B1- 6 902 337

## Beschreibung

Die vorliegende Erfindung betrifft einen austauschbaren Applikationsstoffbehälter für eine Zahnbürste, der einen Datenträger aufweist und mit Zahnpaste oder einem anderen Applikationsstoff gefüllt sein kann, sowie eine elektrische Zahnbürste mit einer Einrichtung zum Beschreiben eines Datenträgers.

Aus der WO 03/054771 A1 ist eine elektrische Zahnbürste bekannt, die aus einem Handstück und einer auswechselbaren Aufsteckbürste besteht. In der Aufsteckbürste befindet sich ein Speicher, in dem eine die Aufsteckbürste identifizierende Information gespeichert ist. In der Aufsteckbürste ist ferner ein Transponder vorhanden, der die im Speicher gespeicherte Information ausgibt, wenn er von einer Abfragestation ein Abfragesignal erhält. Im Handstück befindet sich ein Mikrokontroller, der die kumulierte Benutzungsdauer der identifizierten Aufsteckbürste berechnen und in den Speicher der Aufsteckbürste schreiben kann. Das Handstück ist ferner mit einer Anzeige versehen, mit der die Notwendigkeit des Auswechselns einer Aufsteckbürste angezeigt werden kann.

In der DE 10 2004 062150 ist ein auswechselbares Zubehörteil für eine elektrische Zahnbürste und ein Verfahren zum Bestimmen der Benutzungsdauer des Zubehörteils beschrieben.

Es sind bereits elektrische Zahnbürsten bekannt, in die ein Zahnpastabeutel einsetzbar ist, aus dem während des Betriebs der Zahnbürste Zahnpasta ausgebracht werden kann. Der Beutel ist austauschbar, sodaß er dann, wenn er leer ist, durch einen gefüllten ersetzt werden kann. Es können elektrische Zahnbürsten auch von mehreren Benutzern genutzt werden, wobei jeder Benutzer aufs/ins Handteil der elektrischen Zahnbürste seinen eigenen Bürstenkopf aufstecken bzw. seinen eigenen Zahnpastabeutel einsetzen kann. Dabei kann es vorkommen, daß die Zahnpastabeutel gewechselt werden, bevor sie vollends leer sind, und daß auch bereits benutzte, nur teilweise gefüllte Zahnpastabeutel eingesetzt werden.

Aus der EP 0930960 B1 ist eine Vorrichtung zur Körperpflege mit einer Kassette bekannt, die eine Hilfsflüssigkeit enthält. Die Kassette ist mit einem Schlüssel versehen, der eine Funktion der Vorrichtung freigibt, wenn die Kassette mit der Vorrichtung gekoppelt wird. Der vorliegenden Erfindung liegt die Aufgabe zugrunde, verbesserte Applikationsstoffbehälter und elektrische Zahnbürsten zu schaffen, deren Handhabung vorzugsweise mit verschiedenen Applikationsstoffbehältern erleichtert ist.

Diese Aufgabe wird durch einen Applikationsstoffbehälter gemäß Anspruch 1 sowie durch eine Zahnbürste gemäß Anspruch 6 gelöst. Bevorzugte Ausgestaltungen der Erfindung sind Gegenstand der abhängigen Ansprüche.

Ein erfindungsgemäßer Applikationsstoffbehälter, beispielsweise ein Zahnpastabeutel, weist einen Datenträger mit einem Datenspeicher auf, der von einer geeigneten Zahnbürste gelesen und beschrieben werden kann. Eine geeignete Zahnbürste weist einen Datenempfänger zum Lesen der im Datenträger gespeicherten Daten und einen Datensender zum Beschreiben des Datenträgers auf. Hierdurch kann eine Datenübertragung zwischen dem Applikationsstoffbehälter und der Zahnbürste erfolgen, wobei die vom Datenempfänger gelesenen Daten von einer in der Zahnbürste vorhandenen Steuereinrichtung beispielsweise zur Anzeige des Füllstands im Applikationsstoffbehälter und/oder zur Anpassung des Zahnbürstenbetriebs an den jeweils verwendeten Applikationsstoff verwendet werden können. Der Datensender kann vorzugsweise dazu genutzt werden, aktualisierte Füllstandsdaten, die die im Applikationsstoffbehälter verbleibende Restmenge an Applikationsstoff kennzeichnen, nicht in der Zahnbürste zu speichern, sondern im Datenspeicher des Applikationsstoffbehälters. Dies hat den Vorteil, daß die Füllstandsdaten nicht verloren gehen, wenn der Applikationsstoffbehälter gewechselt wird, beispielsweise weil ein weiterer Benutzer der Zahnbürste seine eigene Zahnpasta verwenden will. Wird der ausgewechselte Applikationsstoffbehälter wieder in die Zahnbürste eingesetzt, kann die Zahnbürste den im Datenspeicher des Applikationsstoffbehälters gespeicherten Füllstand auslesen und/oder anzeigen.

Vorteilhafterweise können weitere Daten im Datenträger des Applikationsstoffbehälters gespeichert sein, und von der Steuereinrichtung zur Steuerung anderer Funktionen genutzt werden. Beispielsweise kann im Datenträger des Applikationsstoffbehälters ein benutzerspezifisches Datenprofil gespeichert werden, das beim Einsetzen des Applikationsstoffbehälters oder auch jedes Mal beim Einschalten der Zahnbürste, von der Steuereinrichtung eingelesen werden kann, sodaß der Betrieb der Zahnbürste individuell für den jeweiligen Benutzer angepaßt werden kann. Beispielsweise kann dies eine Zahnputzdauer sein, die der jeweilige Benutzer mit der speziellen Zahnpasta ausführen möchte. Auch andere Betriebsparameter einer elektrischen Zahnbürste, wie Antriebsgeschwindigkeit, Begrüßungston, Oszillationsfrequenz etc., können in Abhängigkeit der benutzerspezifisch gespeicherten Daten eingestellt werden.

Vorteilhafterweise kann der Datenträger am Applikationsstoffbehälter auch vom Hersteller vorgegebene Steuerungsdaten enthalten, anhand derer die Steuereinrichtung der Zahnbürste Zahnbürstenfunktionen aktiviert, steuert oder verändert. Im einfachsten Fall können diese Daten den vollen Zustand oder den Inhalt des Applikationsstoffbehälters kennzeichnen, und die Steuereinrichtung mittels dieser Daten eine Anzeigevorrichtung der Zahnbürste ansteuern, um den Füllstand und/oder den verwendeten Applikationsstoff anzuzeigen. Anhand der entsprechenden Daten können aber auch andere betriebsrelevante Komponenten, insbesondere der Antrieb und/oder eine Fördereinrichtung zum Ausbringer des Applikationsstoffs gesteuert werden. Beispielsweise kann eine applikationsstoffspezifische Dosiermenge im Datenträger gespeichert sein, die zur Ansteuerung der Fördereinrichtung verwendet wird, sodaß die Fördereinrichtung die vorgegebene Applikationsstoffmenge ausbringt. In Weiterbildung der Erfindung können in dem Datenträger auch Daten zur Steuerung des Antriebsmodus der Zahnbürste gespeichert sein, insbesondere kann die Steuereinrichtung anhand der ausgelesenen Daten aus dem Datenträger des Applikationsstoffbehälters den Zahnbürstenantrieb in einen Putzmodus schalten, wenn der Applikationsstoffbehälter eine Zahnpaste enthält, während die Antriebseinrichtung in einen Poliermodus geschalten wird, wenn der Applikationsstoffbehälter ein Poliermittel enthält.

Bei einer vorteilhaften Ausführung der Erfindung kann mit Hilfe von im Datenträger gespeicherten Daten eine Freischaltung der Zahnbürste erfolgen. In der Steuereinrichtung kann eine Freischaltfunktion vorgesehen sein, die in Abhängigkeit der vom Datenträger empfangenen Daten eine Freischaltung des Zahnbürstenbetriebs und/oder einzelner Betriebsfunktionen erlaubt. Hierdurch kann beispielsweise verhindert werden, daß die Zahnbürste versehentlich ohne Einlegen des Applikationsstoffbehälters in Betrieb gesetzt wird. Ebenso kann vermieden werden, daß die Zahnbürste bei Einlegen eines ungeeigneten Applikationsstoffs in Betrieb gesetzt werden kann, was beispielsweise bei zu zähflüssigen Applikationsstoffen zu einer Beschädigung der Fördereinrichtung führen könnte.

Der Datenträger am Applikationsstoffbehälter sowie die Datenübertragungsmittel können auf verschiedene Weise ausgebildet sein. Vorzugsweise arbeiten der Datenempfänger und/oder der Datensender berührungslos. Bei einer einfachen Ausführung der Erfindung kann der Datenträger einen Magneten aufweisen und der Datenempfänger einen Reed-Sensor besitzen, mittels dessen der Magnet am Applikationsstoffbehälter erfaßt werden kann. Wird der Applikationsstoffbehälter eingelegt, so detektiert der Reed-Sensor einen Puls, der beispielsweise einen Zähler in der Steuereinrichtung auf einen Wert lädt, der dem vollen Zustand des Applikationsstoffbehälters entspricht. Wird nun nachfolgend im Betrieb Applikationsstoff gespendet, so wird dieser Zähler entsprechend dekrementiert, und der jeweilige Füllstand des Applikationsstoffbehälters kann angezeigt werden. Eine derartige Anzeige liefert aber nur dann korrekte Werte, wenn volle Applikationsstoffbehälter eingelegt werden.

Vorzugsweise jedoch ist am Applikationsstoffbehälter ein beschreibbarer Datenträger vorgesehen. Insbesondere kann ein Transponder-Chip vorgesehen werden, der mit einem geeigneten Datenempfänger/-sender in der Zahnbürste kommunizieren kann. Nach einer bevorzugten Ausführung der Erfindung kann als Datenträger ein sogenannter RFID-Chip, also ein Radio Frequency Identification-Chip vorgesehen sein, der mit dem Datensender/-empfänger der Zahnbürste im Frequenzbereich von etwa 13,56 MHz kommuniziert.

Es sind jedoch natürlich auch andere Ausbildungen des Datenträgers und der Datenübertragungsmittel möglich. Beispielsweise kann der Datenträger eine optische Codierung aufweisen, die von einem optischen Sensor in der Zahnbürste gelesen werden kann. Ebenso ist eine elektrische, induktive und/oder magnetische Ausbildung des Datenträgers und/oder der Datenübertragungsmittel möglich.

Der Datenempfänger/-sender der Zahnbürste ist bei einer bevorzugten Ausführung der vorliegenden Erfindung ein Funkempfänger/-sender mit mehreren Antennen zur Kommunikation mit mehreren Datenträgern. Es könnten natürlich auch zwei vollständig separate Datenempfänger/-sender in der Zahnbürste vorgesehen sein, um mit mehreren Datenträgern zu kommunizieren. Eine beträchtliche Kostenersparnis wird jedoch dadurch erreicht, daß mit nur einem Datenempfänger/-sender mehrere Antennen betrieben werden. Vorzugsweise umfaßt der Datenempfänger/-sender eine Umschaltvorrichtung, die wahlweise die eine oder die andere Antenne aktiviert. Vorzugsweise sind die Antennen so ausgelegt, daß die eine Antenne mit dem Datenträger am Applikationsstoffbehälter kommunizieren kann, während die andere Antenne mit einem Datenträger an einer auswechselbaren Aufsteckbürste der Zahnbürste kommunizieren kann. Hierdurch können einerseits Daten vom Applikationsstoffbehälter eingelesen werden, um in Abhängigkeit des Applikationsstoffs in der zuvor beschriebenen Weise den Betrieb der Zahnbürste zu steuern, und andererseits können auch von der jeweils aufgesetzten Aufsteckbürste Daten eingelesen werden, um in Abhängigkeit davon den Betrieb der Zahnbürste in geeigneter Weise zu steuern.

Die Erfindung wird nachfolgend anhand von Ausführungsbeispielen weiter erläutert, die in den Zeichnungen dargestellt sind, wobei alle beschriebenen und/oder bildlich dargestellten Merkmale für sich oder in beliebiger sinnvoller Kombination den Gegenstand der vorliegenden Erfindung auch unabhängig von ihrer Zusammenfassung in den Ansprüchen und deren Rückbeziehung bilden können. Es zeigt:
- Fig. 1:: eine schematische Darstellung einer elektrischen Zahnbürste,
- Fig. 2:: eine Draufsicht auf einen Applikationsstoffbehälter für eine elektrische Zahnbürste, der einen Transponder-Chip zur Datenkommunikation mit der Zahnbürste aufweist,
- Fig. 3:: eine Draufsicht auf einen Applikatiohsstoffbehälter mit einem Transponder-Chip, der an einem Anhängsel des Applikationsstoffbehälters angebracht ist,
- Fig. 4:: eine Draufsicht auf einen Applikationsstoffbehälter mit einem Transponder-Chip, der an Anschlußmitteln des Applikationsstoffbehälters angebracht ist, und
- Fig. 5:: eine schematische Darstellung des Datenempfängers/-senders einer Zahnbürste zur Kommunikation mit dem Datenträger am Applikationsstoffbehälter und einem Datenträger an einer Aufsteckbürste.

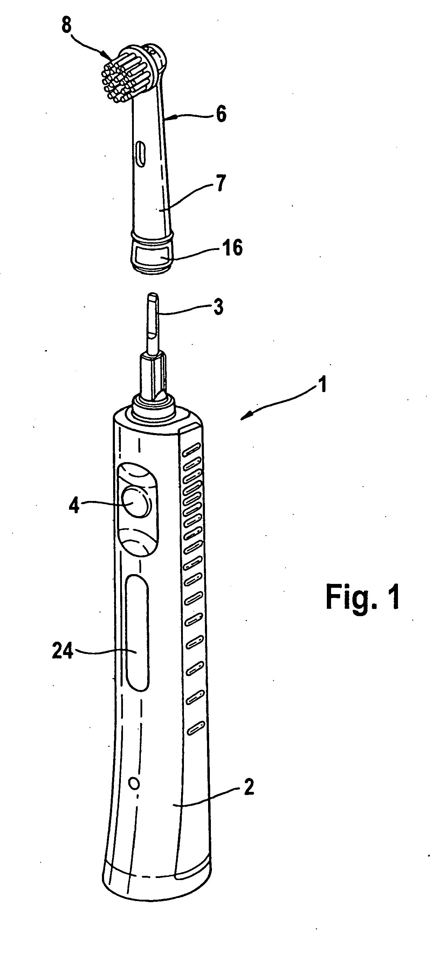

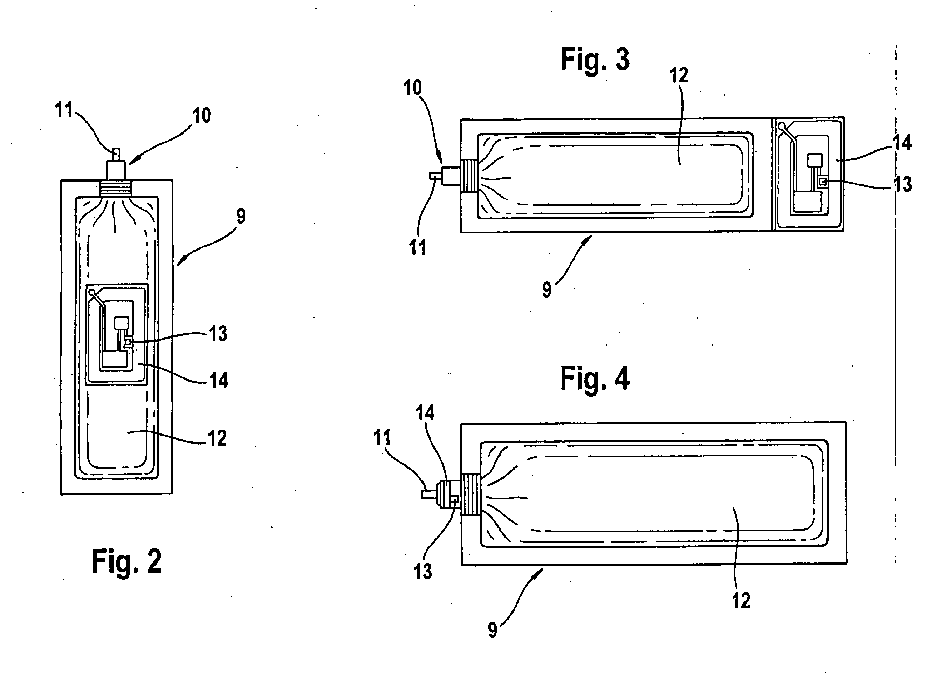

Die in Figur 1 dargestellte elektrische Zahnbürste 1 weist ein Handteil 2 auf, das in an sich bekannter Weise einen Antriebsmotor enthält, der eine stirnseitig aus dem Handteil 2 herausragende Antriebswelle 3 antreibt. Weiterhin enthält das Handteil 2 eine vorzugsweise elektronische Steuereinrichtung, die den Betrieb der Zahnbürste 1 einschließlich des Antriebsmotors steuert. Am Handteil 2 ist ein Ein/Aus-Schalter 4 vorgesehen. Auf die Antriebswelle 3 kann in an sich bekannter Weise eine auswechselbare Aufsteckbürste 6 aufgesetzt werden, die ein Bürstenrohr 7 besitzt, welches ein Borstenfeld 8 trägt. Ins Handteil 2 kann ein Applikationsstoffbehälter 9 eingesetzt werden, vorzugsweise ein Zahnpastabeutel wie ihn die Figuren 2 bis 4 zeigen. Im Handteil 2 ist eine in Figur 1 nicht dargestellte Fördereinrichtung vorgesehen, die beispielsweise eine vom Antriebsmotor angetriebene Pumpe umfassen kann, um die im Zahnpastabeutel 9 gespeicherte Zahnpaste motorisch auszubringen. Die entsprechenden Förderleitungen, die ebenfalls in Figur 1 nicht dargestellt sind, können dabei in die Aufsteckbürste 6 führen, um am Borstenfeld 8 die Zahnpaste auszubringen.

Der Zahnpastabeutel 9 umfaßt dabei an die Fördereinrichtung der Zahnbürste angepaßte Anschlußmittel 10, mit deren Hilfe er an die entsprechend ausgebildete Anschlußschnittstelle der Fördereinrichtung angeschlossen werden kann, sodaß der Innenraum des Zahnpastabeutels 9 mit der Fördereinrichtung in Strömungsverbindung steht. Die Anschlußmittel 10 weisen einen rohrförmigen Anschlußstutzen 11 auf, der in den vorzugsweise aus einer Folie bestehenden Beutelkorpus 12 eingeschweißt ist und aus diesem ein Stück weit hervorragt. Der Anschlußstutzen 11 kann an die fördereinrichtungsseitige, komplementäre Anschlußschnittstelle angeschlossen werden, sodaß Zahnpasta aus dem Innenraum des Beutelkorpus 12 herausgefördert werden kann. Im übrigen ist auch der Zahnpastabeutel 9 selbst in seiner Form an das Gehäuse der Zahnbürste angepaßt, insbesondere an einen Beutelaufnahmeraum in/an der Zahnbürste. Am Zahnpastabeutel 9 ist ein Datenträger 13 vorgesehen, der aus einem Transponder-Chip besteht, der mit einer Datenübertragungseinrichtung 14 verbunden ist. Die Datenübertragungseinrichtung 14 kann eine Antenne in Form einer Magnetspule aufweisen, um mit der Steuereinrichtung im Handteil 2 Daten auszutauschen.

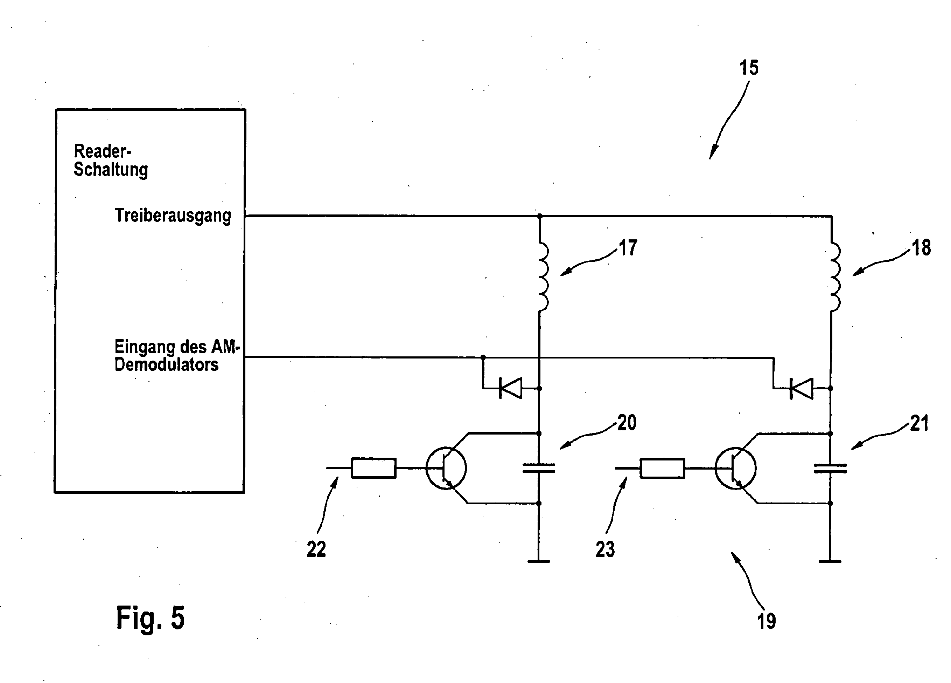

Die Steuereinrichtung im Handteil 2 besitzt ebenfalls eine Datenübertragungseinrichtung 15, die in Figur 5 dargestellt ist und ebenfalls einen Datenempfänger/-sender aufweist. Der Datenempfänger/-sender weist zwei separate Antennen auf, sodaß die Steuereinrichtung nicht nur mit dem Datenträger 13 am Zahnpastabeutel 9, sondern auch mit einem entsprechenden Datenträger 16 am Bürstenrohr 7 der Aufsteckbürste 6 kommunizieren kann. Der Datenträger 16 an der Aufsteckbürste 6 ist vorzugsweise ebenfalls ein Transponder-Chip. Die Datenübertragungseinrichtung 15 enthält zwei Antennenspulen 17 und 18, die mittels einer Umschalteinrichtung 19 wahlweise aktiviert werden können. Die eine Antennenspule 17 ist zur Kommunikation mit dem Datenträger 16 an der Aufsteckbürste 6, die andere Antennenspule 18 zur Kommunikation mit dem Datenträger 13 am Zahnpastabeutel 9 vorgesehen. Die Umschalteinrichtung 19 umfaßt zwei Transistoren, die durch die Steuereinrichtung des Handteils 2 über Eingänge 22, 23 gesteuert werden können. Je nach dem, welcher Transistor angesteuert wird, wird eine der Antennenspulen 17, 18 deaktiviert, indem ein jeweils zugehöriger Schwingkreiskondensator 20, 21 durch den Transistor kurzgeschlossen wird. Dadurch kann sich keine Resonanzüberhöhung der Spannung in dem betreffenden Schwingkreis ausbilden, der Strom im Schwingkreis bleibt gering, und es kann praktisch keine Leistung abgestrahlt bzw. kein Signal empfangen werden.

Über die in dem Datenträger 13 des Zahnpastabeutels 9 gespeicherten Daten können verschiedene Zahnbürstenfunktionen gesteuert werden. Zunächst kann die Steuereinrichtung in Abhängigkeit der eingelesenen Daten eine Anzeigevorrichtung, beispielsweise in Form eines Displays 24, ansteuern, um beispielsweise die Sorte der jeweils eingelegte Zahnpasta und/oder den Füllstand im Applikationsstoffbehälter 9 anzuzeigen. Es können jedoch auch Daten in dem Datenträger 13 gespeichert sein, die den Antriebsmodus des Antriebsmotors und/oder den Betrieb der Fördereinrichtung beeinflussen. Beispielsweise kann in Abhängigkeit der eingelesen Daten vom Zahnpastabeutel der Antrieb zwischen einem Poliermodus und einem Putzmodus umgeschaltet werden. Die Fördereinrichtung kann in Abhängigkeit der eingelesenen Daten verschiedene Zahnpastamengen ausbringen, die für die jeweilige Zahnpasta spezifisch sind. Ebenfalls kann eine Freischaltung beliebiger Zahnbürstenfunktionen realisiert werden. In der Steuereinrichtung ist hierzu eine Freischaltfunktion vorgesehen, die den Betrieb der Zahnbürste nur dann freischaltet, wenn vom Datenträger 13 bzw. 16 des Zahnpastabeutels 9 und/oder der Aufsteckbürste 6 der "richtige" Code eingelesen wird.

Weiterhin kann die Steuereinrichtung des Handteils 2 im Datenträger 13 des Zahnpastabeutels 9 Füllstandsdaten ablegen. Dazu wird die Steuereinrichtung beim Einlegen eines Zahnpastabeutels zunächst den dort gespeicherten Füllstand auslesen, der dann bei jedem Inbetriebsetzen der Zahnbürste um einen verbrauchsabhängigen Wert erniedrigt wird. Der aktuelle Füllstand oder die Menge des verbrauchten Applikationsstoffs wird beim Außerbetriebsetzen der Zahnbürste zum Datenträger 13 des Zahnpastabeutels 9 übertragen, sodaß bei erneutem Inbetriebsetzen der Zahnbürste oder auch nach einem Wechsel und Wiedereinsetzen des Zahnpastabeutels 9 dort der aktuelle Füllstand gespeichert ist, und somit die Füllstandsanzeige auch dann korrekt anzeigt, wenn ein nicht ganz voller Applikationsstoffbehälter in die Zahnbürste eingelegt wird.

Vorteilhafterweise können in dem Datenträger 13 auch benutzerspezifische Daten abgelegt werden, um den Betrieb der Zahnbürste benutzerspezifisch in Abhängigkeit der gespeicherten Daten zu steuern. Dies ist beispielsweise dann sinnvoll, wenn das Handteil 2 von mehreren Benutzern genutzt wird, die verschiedene Applikationsstoffe verwenden. Aber auch dann, wenn derselbe Zahnpastabeutel verwendet wird, können benutzerspezifische Daten in dem Datenträger 13 gespeichert werden. Beispielsweise können für verschiedene Benutzer verschiedene Zahnpastaabgabemengen definiert werden, sodaß jeder Benutzer die von ihm gewünschte Zahnpastamenge erhält. Selbst bei nur einem Benutzer können beispielsweise verschiedene Abgabemengen für morgens und abends definiert werden. Weitere Betriebsgrößen, wie beispielsweise Antriebsgeschwindigkeit, Antriebsmodus etc., können benutzerspezifisch im Datenträger 13 gespeichert werden.

Bei einer anderen Ausführung der Erfindung können auch mehrere Applikationsstoffbehälter oder ein Applikationsstoffbehälter mit mehreren Aufnahmekammern zur Abgabe verschiedener Applikationsstoffe Verwendung finden, wobei in der Zahnbürste dann vorteilhafterweise zwei Fördereinrichtungen vorgesehen sind. In diesem Fall kann in dem Datenträger 13 oder in den Datenträgern 13 auch ein Mischungsverhältnis der beiden Applikationsstoffe abgespeichert sein, sodaß die beiden Fördereinrichtungen im passenden Antriebsmodus betrieben werden, um das gewünschte Mischungsverhältnis zu erreichen.

Nach einer besonders vorteilhaften Ausführung der Erfindung kann in dem Datenträger 13 des Zahnpastabeutels 9 auch ein kompletter Datensatz oder ein Teil hiervon gespeichert sein, der bei Einsetzen des Zahnpastabeutels ins Handteil 2 in die Steuereinrichtung eingelesen wird. Insbesondere können hierdurch Steuerungs-Updates ins Handteil 2 nachträglich eingespielt werden, und dadurch Steuerungsfunktionen des Handteils 2 ergänzt oder verändert werden, ohne daß der Zahnbürstenbesitzer hierzu ein entsprechendes Fachgeschäft aufsuchen müsste.

## Patentansprüche

1. Applikationsstoffbehälter für Zahnbürsten, der mit Zahnpaste oder einem anderen Applikationsstoff gefüllt sein kann, mit einem von der Zahnbürste lesbaren Datenträger (13), **dadurch gekennzeichnet, daß** der Datenträger (13) einen von der Zahnbürste beschreibbaren Datenspeicher aufweist.

2. Applikationsstoffbehälter nach Anspruch 1, **dadurch gekennzeichnet, daß** als Datenträger (13) ein Transponder-Chip vorgesehen ist und/oder der Datenträger (13) mit einer Datenübertragungseinrichtung (14) versehen ist.

3. Applikationsstoffbehälter nach Anspruch 1, **dadurch gekennzeichnet, daß** der Datenträger (13) einen Magneten aufweist.

4. Applikationsstoffbehälter nach einem der vorhergehenden Ansprüche, **dadurch gekennzeichnet, daß** der Datenträger (13) Daten zur Aktivierung und/oder Steuerung zumindest einer Funktion der Zahnbürste enthält.

5. Applikationsstoffbehälter nach einem der vorhergehenden Ansprüche, **dadurch gekennzeichnet, daß** im Datenträger (13) Daten über den Füllstand des Applikationsstoffs im Applikationsstoffbehälter und/oder dessen Füllung kennzeichnende Daten gespeichert sind.

6. Applikationsstoffbehälter nach einem der vorhergehenden Ansprüche, **dadurch gekennzeichnet, daß** im Datenträger (13) des Applikationsstoffbehälters (9) benutzerspezifische Daten gespeichert sind.

7. Applikationsstoffbehälter nach einem der vorhergehenden Ansprüche, **dadurch gekennzeichnet, daß** im Datenträger (13) des Applikationsstoffbehälters (9) ein Steuerungsprogramm und/oder ein Teil eines Steuerungsprogramms, vorzugsweise ein Software-Update für den Betrieb der Zahnbürste gespeichert ist.

8. Elektrische Zahnbürste mit einem Datenempfänger (15) zum Lesen eines Datenträgers (13), der an einem austauschbaren Applikationsstoffbehälter (9) angebracht ist, der mit Zahnpaste oder einem anderen Applikationsstoff gefüllt sein kann, **dadurch gekennzeichnet, daß** die elektrische Zahnbürste einen Datensender (15) zum Beschreiben des Datenträgers (13) aufweist.

9. Elektrische Zahnbürste nach Anspruch 8, **dadurch gekennzeichnet, daß** die elektrische Zahnbürste eine Steuereinrichtung aufweist, die die Zahnbürste in Abhängigkeit von den gelesenen Daten steuert.

10. Elektrische Zahnbürste nach Anspruch 8 oder 9, **dadurch gekennzeichnet, daß** der Datenempfänger und/oder der Datensender (15) berührungslos Daten übertragen.

11. Elektrische Zahnbürste nach einem der Ansprüche 8 bis 10, **dadurch gekennzeichnet, daß** der Datenempfänger einen Reed-Sensor zur Erfassung eines Magneten aufweist.

12. Elektrische Zahnbürste nach einem der Ansprüche 8 bis 11, **dadurch gekennzeichnet, daß** eine Anzeigevorrichtung (24) vorgesehen ist, die in Abhängigkeit von im Datenträger (13) gespeicherten Daten ansteuerbar ist.

13. Elektrische Zahnbürste nach einem der Ansprüche 8 bis 12, **dadurch gekennzeichnet, daß** sie die Menge des applizierten Applikationsstoffs und/oder die im Applikationsstoffbehälter (9) verbleibende Applikationsstoffrestmenge zum Datenträger (13) des Applikationsstoffbehälters (9) überträgt.

14. Elektrische Zahnbürste nach einem der beiden vorhergehenden Ansprüche, **dadurch gekennzeichnet, daß** sie eine Füllstandsanzeige (24) aufweist, die von der Steuereinrichtung in Abhängigkeit der aus dem Datenträger (13) ausgelesenen Daten ansteuerbar ist.

15. Elektrische Zahnbürste nach einem der Ansprüche 8 bis 14, **dadurch gekennzeichnet, daß** die Steuereinrichtung in Abhängigkeit von aus dem Datenträger (13) ausgelesenen Daten den Betrieb der Zahnbürste steuert und/oder zumindest eine Steuerungsfunktion der Zahnbürste aktiviert und/oder verändert.

16. Elektrische Zahnbürste nach dem vorhergehenden Anspruch, **dadurch gekennzeichnet, daß** die Steuereinrichtung in Abhängigkeit von aus dem Datenträger (13) ausgelesenen Daten die Fördereinrichtung und/oder einen Bürstenantrieb steuert.

17. Elektrische Zahnbürste nach einem der Ansprüche 8 bis 16, **dadurch gekennzeichnet, daß** in der Steuereinrichtung eine Freischaltfunktion gespeichert ist, die in Abhängigkeit der vom Datenträger (13) des Applikationsstoffbehälters (9) empfangenen Daten eine Freischaltung des Zahnbürstenbetriebs und/oder einzelner Betriebsfunktionen der Zahnbürste bewirkt oder verweigert.

18. Elektrische Zahnbürste nach einem der Ansprüche 8 bis 17, **dadurch gekennzeichnet, daß** die Steuereinrichtung aus dem Datenträger (13) des Applikationsstoffbehälters (9) ein Steuerungsprogramm und/oder ein Teil eines Steuerungsprogramms, insbesondere ein Software-Update für den Betrieb der Zahnbürste ausliest und/oder abarbeitet.

19. Elektrische Zahnbürste vorzugsweise nach einem der Ansprüche 8 bis 18, **dadurch gekennzeichnet, daß** die Steuereinrichtung der Zahnbürste Empfangsmittel zum Empfang von Daten von mehreren Datenträgern (13, 16) aufweist.

20. Elektrische Zahnbürste nach dem vorhergehenden Anspruch, **dadurch gekennzeichnet, daß** die Empfangsmittel (15) mehrere Antennen (17, 18) aufweisen.

21. Elektrische Zahnbürste nach dem vorhergehenden Anspruch, **dadurch gekennzeichnet, daß** eine Umschaltvorrichtung (19) zur wahlweisen Aktivierung einer der Antennen (17, 18) vorgesehen ist.

## Claims

1. An application substance container for toothbrushes, which container may be filled with toothpaste or another application substance, with a data medium (13) that is readable by the toothbrush, **characterized in that** the data medium (13) has a data memory that may be written to by the toothbrush.

2. The application substance container according to claim 1, **characterized in that** a transponder chip is provided as a data medium (13) and/or the data medium (13) is provided with a data transfer device (14).

3. The application substance container according to claim 1, **characterized in that** the data medium (13) comprises a magnet.

4. The application substance container according to any one of the preceding claims, **characterized in that** the data medium (13) includes data for activation and/or control of at least one function of the toothbrush.

5. The application substance container according to any one of the preceding claims, **characterized in that** data about the fill level of the application substance in the application substance container and/or data characterizing its fullness are stored in the data medium (13).

6. The application substance container according to any one of the preceding claims, **characterized in that** user-specific data are stored in the data medium (13) of the application substance container (9).

7. The application substance container according to any one of the preceding claims, **characterized in that** a control program and/or a portion of a control program, preferably a software update for the operation of the toothbrush, is stored in the data medium (13) of the application substance container (9).

8. An electric toothbrush with a data receiver (15) to read a data medium (13) that is attached to an exchangeable application substance container (9) that may be filled with toothpaste or another application substance, **characterized in that** the electric toothbrush has a data transmitter (15) to write to the data medium (13).

9. The electric toothbrush according to claim 8, **characterized in that** the electric toothbrush has a control device that controls the toothbrush depending on the read data.

10. The electric toothbrush according to claim 8 or 9, **characterized in that** the data receiver and/or the data transmitter (15) transmit data without contact.

11. The electric toothbrush according to any one of the claims 8 to 10, **characterized in that** the data receiver has a reed sensor to detect a magnet.

12. The electric toothbrush according to any one of the claims 8 to 11, **characterized in that** a display device (24) is provided that may be controlled depending on the data stored in the data medium (13).

13. The electric toothbrush according to any one of the claims 8 to 12, **characterized in that** it transmits the amount of applied application substance and/or the amount of application substance remaining in the application substance container (9) to the data medium (13) of the application substance container (9).

14. The electric toothbrush according to one of the two preceding claims, **characterized in that** it has a fill level display (24) that may be controlled by the control device depending on the data read from the data medium (13).

15. The electric toothbrush according to any one of the claims 8 to 14, **characterized in that** the control device controls the operation of the toothbrush and/or activates and/or modifies at least one control function of the toothbrush depending on data read from the data medium (13).

16. The electric toothbrush according to the preceding claim, **characterized in that** the control device controls the conveyor device and/or a brush drive depending on data read from the data medium (13).

17. The electric toothbrush according to any one of the claims 8 to 16, **characterized in that** an unlocking function is stored in the control device, which unlocking function produces or refuses an unlocking of the toothbrush operation and/or individual operating functions depending on the data received from the data medium (13) of the application substance container (9).

18. The electric toothbrush according to any one of the claims 8 to 17, **characterized in that** the control device reads out and/or executes a control program and/or a portion of a control program, in particular a software update for the operation of the toothbrush, from the data medium (13) of the application substance container (9).

19. The electric toothbrush, preferably according to any one of the claims 8 to 18, **characterized in that** the control device of the toothbrush has receiving means to receive data from multiple data media (13, 16).

20. The electric toothbrush according to the preceding claim, **characterized in that** the receiving means (15) have multiple antennas (17, 18).

21. The electric toothbrush according to the preceding claim, **characterized in that** a switching device (19) is provided for selective activation of one of the antennas (17, 18).

## Revendications

1. Récipient à substance d'application pour brosses à dents, qui est rempli de dentifrice ou d'une autre substance d'application, comprenant un support de données (13) pouvant être lu par la brosse à dents, **caractérisé en ce que** le support de données (13) présente une mémoire sur laquelle la brosse à dents peut écrire des données.

2. Récipient à substance d'application selon la revendication 1, **caractérisé en ce que** le support de données (13) se présente sous la forme d'une puce de transpondeur et/ou le support de données (13) est doté d'un dispositif de transmission de données (14).

3. Récipient à substance d'application selon la revendication 1, **caractérisé en ce que** le support de données (13) présente un aimant.

4. Récipient à substance d'application selon l'une des revendications précédentes, **caractérisé en ce que** le support de données (13) contient des données permettant l'activation et/ou la commande d'au moins une fonction de la brosse à dents.

5. Récipient à substance d'application selon l'une des revendications précédentes, **caractérisé en ce que** des données sur le niveau de remplissage de la substance d'application dans le récipient à substance d'application et/ou des données caractérisant le remplissage de celui-ci sont enregistrées dans le support de données (13).

6. Récipient à substance d'application selon l'une des revendications précédentes, **caractérisé en ce que** des données spécifiques à l'utilisateur sont enregistrées dans le support de données (13) du récipient à substance d'application (9).

7. Récipient à substance d'application selon l'une des revendications précédentes, **caractérisé en ce qu'**un programme de commande et/ou une partie d'un programme de commande, de préférence une mise à jour logicielle pour le fonctionnement de la brosse à dents, est enregistré(e) dans le support de données (13) du récipient à substance d'application (9).

8. Brosse à dents électrique comprenant un récepteur de données (15) permettant de lire un support de données (13) qui est disposé sur un récipient à substance d'application interchangeable (9) pouvant être rempli de dentifrice ou d'une autre substance d'application, **caractérisée en ce que** la brosse à dents électrique présente un émetteur de données (15) permettant d'écrire des données sur le support de données (13).

9. Brosse à dents électrique selon la revendication 8, **caractérisée en ce que** la brosse à dents électrique présente un dispositif de commande qui commande la brosse à dents en fonction des données lues.

10. Brosse à dents électrique selon la revendication 8 ou 9, **caractérisée en ce que** le récepteur de données et/ou l'émetteur de données (15) transmettent des données sans contact.

11. Brosse à dents électrique selon l'une des revendications 8 à 10, **caractérisée en ce que** le récepteur de données présente un capteur Reed permettant de détecter un aimant.

12. Brosse à dents électrique selon d'une des revendications 8 à 11, **caractérisée en ce qu'**il est prévu un dispositif d'affichage (24) qui peut être activé en fonction de données enregistrées dans le support de données (13).

13. Brosse à dents électrique selon l'une des revendications 8 à 12, **caractérisé en ce qu'**elle transmet la quantité de substance d'application appliquée et/ou la quantité résiduelle de substance d'application restant dans le récipient à substance d'application (9) au support de données (13) du récipient à substance d'application (9).

14. Brosse à dents électrique selon l'une des deux revendications précédentes, **caractérisée en ce qu'**elle présente un affichage du niveau de remplissage (24) qui peut être activé par le dispositif de commande en fonction des données lues à partir du support de données (13).

15. Brosse à dents électrique selon l'une des revendications 8 à 14, **caractérisée en ce que** le dispositif de commande commande le fonctionnement de la brosse à dents en fonction de données lues à partir du support de données (13) et/ou active et/ou modifie au moins une fonction de commande de la brosse à dents.

16. Brosse à dents électrique selon la revendication précédente, **caractérisée en ce que** le dispositif de commande commande le dispositif d'alimentation et/ou l'entraînement de la brosse en fonction de données lues à partir du support de données (13).

17. Brosse à dents électrique selon l'une des revendications 8 à 16, **caractérisée en ce que** le dispositif de commande inclut une fonction de validation qui autorise ou refuse une validation du fonctionnement de la brosse à dents et/ou de différentes fonctions de la brosse à dents suivant les données reçues du support de données (13) du récipient à substance d'application (9).

18. Brosse à dents électrique selon l'une des revendications 8 à 17, **caractérisée en ce que** le dispositif de commande lit et/ou exécute un programme de commande et/ou une partie d'un programme de commande, en particulier une mise à jour logicielle pour le fonctionnement de la brosse à dents, à partir du support de données (13) du récipient à substance d'application (9).

19. Brosse à dents électrique de préférence selon l'une des revendications 8 à 18, **caractérisée en ce que** le dispositif de commande de la brosse à dents présente des moyens de réception permettant de recevoir des données de plusieurs supports de données (13, 16).

20. Brosse à dents électrique selon la revendication précédente, **caractérisée en ce que** les moyens de réception (15) présentent plusieurs antennes (17, 18).

21. Brosse à dents électrique selon la revendication précédente, **caractérisé en ce qu'**un dispositif de commutation (19) est prévu pour activer au choix une des antennes (17, 18).
